# EUROPEAN PATENT APPLICATION

(11) **EP 4 834 118 A1**
(43) Date of publication of application: **04.11.2026**
(21) Application number: 25382448.6
(22) Date of filing: 02.05.2025
(51) Int. Cl.: A23B 2/40, A23B 2/42, A23P 20/10, B65G 17/24

(54) **METHOD AND SYSTEM FOR THERMALLY TREATING ENCASED FOOD PRODUCTS**

(71) Applicant: Metalquimia, SAU, 17007 Girona (ES)
(72) Inventor: LAGARES GAMERO, Josep, 17850 Besalú (ES)
(74) Representative: Torner, Juncosa I Associats, SL

(57) **Abstract**

It is disclosed a method for thermally treating encased food products, comprising the steps of: conveying the encased food products in a conveying direction along a conveying path; subjecting the encased food products to a first airflow in a first portion of the conveying path; subsequently subjecting the encased food products to a second airflow in a second portion of the conveying path; wherein the first and second airflows are perpendicular to the conveying direction; wherein the relative humidity and/or the temperature of the second airflow are greater than the ones of the first airflow; and wherein the method further comprises the step of rotating the encased food products about a rotation axis perpendicular to the conveying direction, while the encased food products are conveyed in the conveying direction along at least part of the conveying path

It is also disclosed a system for thermally treating encased food products.

## Description

### Technical field

The present invention relates to a method for thermally treating encased food products. The present invention also relates to a system for thermally treating encased food products. Although the present invention is particularly advantageous for thermally treating food products having an alginate or collagen casing, it is also applicable to food products with casings of made of other elements.

### Background of the Invention

It is known in the art to dry, cook or cure food products by blowing air to the food products as they are being conveyed on a conveyor. The blown air is typically conditioned so that it has predetermined properties (temperature, humidity, etc.) that are optimal for the treatment to be performed on the product. The optimal air conditions vary greatly depending on the type of food product to be treated, the dimensions of the food product to be treated and the results that it is desired to achieve. An example of this kind of treatment can be found in EP 3238547 A1.

EP 3238547 A1 discloses an air drying plant for air drying cut food consisting of a conveyor for sliced food defining a conveying surface, a plurality of blowing conduits with blowing openings channelling a treated airflow at a speed of treatment with a controlled temperature comprised between 40°C and 60°C and a controlled humidity; wherein the conveyor includes air treatment segments with conveying surfaces facing and adjacent to said blowing openings, said treated airflow being channelled against said conveying surface in an upward or downward direction; and wherein the conveyor also includes idle segments intercalated between said air treatment segments, the conveying surface of which is not facing the blowing openings, nor is it subjected to an airflow.

These kinds of treatments are typically limited to treat food products of reduced thickness as in thick products the treatment would not be uniform, resulting in a treated outer area of the product, but with the inner area or core of the food product with limited or no treatment.

The present invention aims to avoid these problems of known systems and methods for thermally treating food products, and in particular, for thermally treating encased food products.

### Description of the Invention

According to a first aspect of the present invention, it is disclosed a method for thermally treating encased food products, as defined in claim 1, comprising the steps of: conveying the encased food products in a conveying direction along a conveying path; subjecting the encased food products to a first airflow in a first portion of the conveying path, the first airflow being perpendicular to the conveying direction and having a first relative humidity and a first temperature, thereby defining a first treating step; subsequently subjecting the encased food products to a second airflow in a second portion of the conveying path, the second airflow being perpendicular to the conveying direction and having a second relative humidity and a second temperature, thereby defining a second treating step; wherein the second relative humidity and/or the second temperature are greater than the first relative humidity and/or the first temperature; and wherein the method further comprises the step of rotating the encased food product about a rotation axis perpendicular to the conveying direction, while the encased food product is conveyed in the conveying direction along at least part of the conveying path. In other words, the encased food products are rotated at least in part of the conveying path while they are being conveyed in the conveying direction along the conveying path.

Rotation of the products provides even exposure of the encased food products to treatment conditions.

In accordance with the first aspect of the present invention, the first treating step may be a drying step of the encased food products and/or the second treating step may be a cooking or partially cooking step of the encased food products.

According to the first aspect of the present invention, the rotation axis of each encased food product may also be perpendicular to the first and second airflows.

In accordance with the first aspect of the present invention, each encased food product may rotate supported on two adjacent rollers displaceable in the conveying direction; the two adjacent rollers having a longitudinal axis parallel to the rotation axis of the encased food product.

According to the first aspect of the present invention, the two adjacent smooth rollers may be rotatable around an axis parallel to the rotation axis of the encased food products.

In accordance with the first aspect of the present invention, the rollers may have a smooth surface.

According to the first aspect of the present invention, the first relative humidity may be from 1% to 20%, preferably from 5% to 10%; and/or the second relative humidity may be from 50% to 95%, preferably from 70% to 90 %.

In accordance with the first aspect of the present invention, the first temperature may be from 60 °C to 100 °C, preferably from 80 °C to 90 °C; and/or the second temperature may be from 60 °C to 100 °C, preferably from 80 °C to 90 °C.

According to the first aspect of the present invention, the first treating step may last from 1 minute to 10 minutes, preferably from 3 minutes to 7 minutes, more preferably from 4 minutes to 6 minutes; and/or the second treating step may last from 5 minutes to 30 minutes, preferably from 7 minutes to 25 minutes, more preferably from 9 minutes to 20 minutes.

In accordance with the first aspect of the present invention, the method may further comprise a rehydration step between the first treating step and the second treating step, wherein no perpendicular airflow is applied to the encased food product. This rehydration step may also be referred to as pause step or idle step.

According to the first aspect of the present invention, the encased food product may be rotated, at least, while being conveyed along the first and/or second portions of the conveying path. In other words, the encased food product may be rotated, at least, while being subjected to the first and/or second airflow. In this way, the encased food product is evenly exposed to the first and/or second airflow, thereby providing an even treatment of the encased food product.

In accordance with the first aspect of the present invention, the first airflow and/or the second airflow may be created by an air circulation unit.

According to the first aspect of the present invention, the first airflow may be created by a first impulsion conduit, of a first impulsion circuit, with a plurality of first blowing openings facing the conveyor belt in the first portion of the conveying path; and by a first return conduit, of an air return circuit, with one or more first return openings, the first blowing openings and the one or more first return openings being arranged to create the first airflow; and wherein the second airflow is created by a second impulsion conduit, of a second impulsion circuit, with a plurality of second blowing openings facing the conveyor belt in the second portion of the conveying path; and by a second return conduit, of the air return circuit, with one or more second return openings, the second blowing openings and the one or more second return openings being arranged to create the second airflow.

In accordance with the first aspect of the present invention, the first impulsion conduit, the second impulsion conduit, the first return conduit and/or the second return conduit may include at least one flexible wall configured to react adapting its shape to an inner air pressure of the conduit so that the first and/or the second air flow is evenly distributed along the corresponding portion of the conveying path. With the at least one flexible wall, the conduit is able to act as a compensating reservoir of the corresponding air circuit.

According to the first aspect of the present invention, the first and/or second conduit may extend longitudinally following a direction parallel to the conveying path.

In accordance with the first aspect of the present invention, the encased food product may be elongated.

According to the first aspect of the present invention, the encased food product may be a co-extruded food product having an alginate or collagen casing. Such alginate or collagen casing may additionally contain other components in lesser amounts. Other types of casing may also be used.

In accordance with the first aspect of the present invention, the second airflow may comprise water vapour. Among other benefits, using water vapour, i.e. steam, improves the heat transfer and prevents the encased foods from drying out.

According to a second aspect of the present invention, it is disclosed a system for thermally treating encased food products, according to claim 10, the system comprising: a conveyor belt configured to convey encased food products in a conveying direction along a conveying path; an air circulation unit configured to create a first airflow in a first portion of the conveying path, the first airflow being perpendicular to the conveying direction, and to create a second airflow in a second portion of the conveying path, the second airflow being perpendicular to the conveying direction; and an air conditioning unit fluidly connected to the air circulation unit and configured to condition the first airflow to a first relative humidity and to a first temperature, and to condition the second airflow to a second relative humidity and to a second temperature; wherein the conveyor belt is further configured to rotate the encased food products about a rotation axis perpendicular to the conveying direction, while the encased food products are conveyed in the conveying direction along at least part of the conveying path. In other words, the conveyor belt is configured to rotate the encased food products along at least a portion of the conveying path while conveying them in the conveying direction.

Rotation of the products provides even exposure of the encased food products to treatment conditions.

In accordance with the second aspect of the present invention, the rotation axis of each encased food product may also be perpendicular to the first and second airflows.

According to the second aspect of the present invention, the conveyor belt may comprise a plurality of rollers displaceable in the conveying direction; the rollers having a longitudinal axis parallel to the rotation axis of the encased food products.

In accordance with the second aspect of the present invention, the rollers may be rotatable around an axis parallel to the rotation axis of the encased food products.

According to the second aspect of the present invention, the rollers may have a first and a second longitudinal end, the first longitudinal end being rotatably supported at a first drive chain and the second longitudinal end being rotatably supported at a second drive chain; and the first and second drive chains may be configured to drive the plurality of rollers in the conveying direction along the conveying path.

According to the second aspect of the present invention, the rollers may comprise, at the first and/or second longitudinal end thereof, a gear intermeshing with an auxiliar drive chain configured to rotate the rollers around their corresponding rotation axis. Alternatively, the rollers may comprise, at the first or second longitudinal end thereof, a pinion engaging with an auxiliar rack configured to rotate the rollers around their corresponding rotation axis. Other means to rate the rollers around their corresponding rotation axis are also possible.

In accordance with the second aspect of the present invention, the rollers may have a smooth surface.

According to the second aspect of the present invention, the conveying path may further comprise a rehydration portion located between the first and second portions, where no perpendicular airflow is applied to the encased food product.

In accordance with the second aspect of the present invention, the air circulation unit comprises: an air impulsion circuit having at least a first impulsion conduit with a plurality of first blowing openings facing the conveyor belt in the first portion of the conveying path, and a second impulsion conduit with a plurality of second blowing openings facing the conveyor belt in the second portion of the conveying path; and an air return circuit comprising at least a first return conduit with one or more first return openings, the first blowing openings and the one or more first return openings being arranged to create the first airflow; the air return circuit further comprising at least a second return conduit with one or more second return openings, the second blowing openings and the one or more second return openings being arranged to create the second airflow.

According to the second aspect of the present invention, the first impulsion conduit, the second impulsion conduit, the first return conduit and/or the second return conduit may include at least one flexible wall configured to react adapting its shape to an inner air pressure of the conduit so that the first and/or the second air flow is evenly distributed along the corresponding portion of the conveying path. With the at least one flexible wall, the conduit is able to act as a compensating reservoir of the corresponding air circuit.

In accordance with the second aspect of the present invention, the first impulsion conduit, the second impulsion conduit, the first return conduit and/or the second return conduit may extend longitudinally following a direction parallel to the conveying path.

According to the second aspect of the present invention, the air impulsion circuit may be arranged above the conveying path and/or the air return circuit is arranged below the conveying path. However, other arrangements of the air impulsion circuit and of the air return circuit are also possible. For example, both the air impulsion circuit and the air return circuit may be arranged above, or below, the conveying path.

In accordance with the second aspect of the present invention, the system may further comprise a co-extrusion unit for extruding a food dough into a flow of co-extruded food product having an alginate casing; a salt supply unit for supplying a salt solution to the flow of co-extruded food product; a separation unit for dividing the flow of co-extruded food product into individual co-extruded food products; and a transfer unit for transferring the individual co-extruded food products into the conveyor belt.

According to the second aspect of the present invention, the system may further comprise an automatic machine for forming and transferring batches of encased food products that comprises an automatic packaging unit, so that the thermally treated encased food products are packaged in appropriate containers to be subsequently stored, distributed, etc.

Unless explicitly stated otherwise or where inherently incompatible, the features described in connection with the first aspect of the present invention are equally applicable to the second aspect of the present invention, and vice versa.

In the present document, an encased food product refers to a food product at least partially enclosed within an outer casing that may be formed from natural or synthetic edible materials in order to, among other, encapsulate, protect, or preserve the food product.

In the present document, airflow refers to the movement of air, either naturally or mechanically induced, which may include the presence of additional gases, such as water vapor, i.e. steam.

A smooth surface in the context of a roller is understood as an outer surface that is substantially uniform and free from significant roughness, protrusions, indentations, or texture variations that could provide a permanent mark to the food product.

A cooked product is understood as a food item that has undergone a thermal processing step sufficient to fully transform its raw components into a safe to consume state. A cooked product requires no further thermal treatment before consumption, besides optional heating.

A partially cooked product is understood as a food item that has undergone an initial thermal processing step insufficient to fully transform its raw components into a safe to consume state. The product remains undercooked or not safe to consume until it undergoes additional cooking.

In the case of sausages and similar encased food products, a partially cooked product refers to a sausage in which the core temperature has reached approximately 55 °C, whereas a fully cooked, or simply cooked, product refers to a sausage in which the core temperature has reached approximately 72-74°C.

In the present document, "include, comprise, contain, have, etc." are used as synonyms and do not exclude additional, unrecited elements or steps, unless explicitly stated otherwise. On the other hand, the wording "consists of" excludes additional, unrecited elements or steps.

In the present document, the expression "A, B and/or C", or similar constructions, is to be understood as encompassing any one of the listed elements individually, any combination of them, or all listed elements together, unless explicitly stated otherwise.

In the present document, unless explicitly stated otherwise, the endpoints of all ranges of values are to be considered included in the range.

Also, terms of position and location relative to a global reference frame, such as "above" and "below," are used to assist with describing the embodiments depicted in the drawings, however such terms are not intended to limit the embodiments or claims to structures having a particular global orientation, unless explicitly stated otherwise.

This description and the appended claims also refer to various physical measurements and dimensional properties. It will be understood that essentially all measurements are subject to ranges of error as a result of environmental conditions and typical variations in instrument precision, and all manufactured parts are subject to variations in dimension as a result of typical manufacturing tolerances. Thus, all dimensions and measurements used in herein will be understood to be approximate, but within a range of typical variations, as will be understood by persons of ordinary skill in the art in view of the disclosure herein. It will be understood that references to geometric position, such as parallel, perpendicular, tangent, etc. allow deviations up to ± 5° from the theoretical position defined by this nomenclature. It will also be understood that any range of values given may not be optimal in extreme values and may require adaptations of the invention to these extreme values are applicable, such adaptations being within reach of a skilled person.

### Brief description of the Figures

The foregoing and other advantages and features will be more fully understood from the following detailed description of embodiments of the present invention with reference to the accompanying drawings, to be taken in an illustrative and non-limitative manner, in which:
FIG. 1 shows a schematic front view of a first exemplary embodiment of a system for thermally treating encased food products according to the invention.
FIG. 2 shows a schematic front view of a second exemplary embodiment of a system for thermally treating encased food products according to the invention.
FIG. 3 shows a front view of the conveyor belt of the first exemplary embodiment of a system according to the present invention.
FIG. 4 shows a top view of the conveyor belt of the first exemplary embodiment of a system according to the invention shown in FIG. 3
FIG. 5 shows a schematic section view of the first exemplary embodiment of a system according to the present invention.

### Detailed Description of the Invention and of particular embodiments

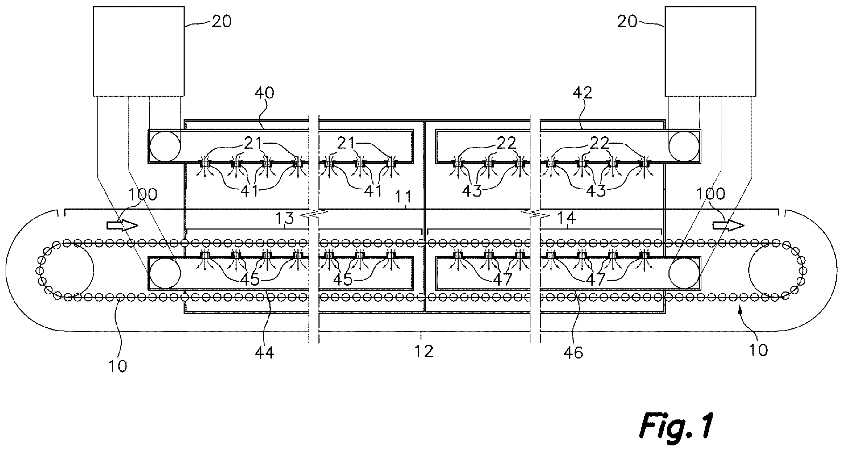

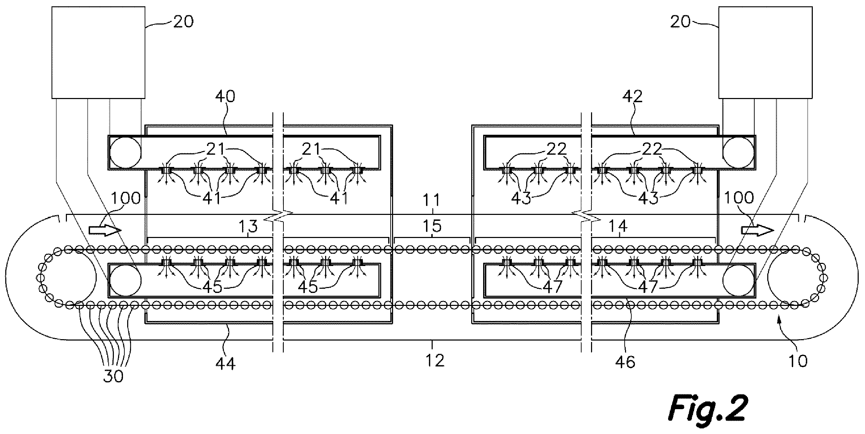

FIGS. 1 and 2 show a schematic front view of a first and a second exemplary embodiment, respectively, of a system for thermally treating encased food products. Both exemplary embodiments comprise a conveyor belt 10 for conveying encased food products in a conveying direction 100 along a conveying path. The conveyor belt 10 of these exemplary embodiments comprises a plurality of rollers 30 displaceable in the conveying direction. The rollers 30 have a longitudinal axis perpendicular to the conveying direction 10 and are configured so that food products are supported on two adjacent rollers 30. The rollers 30 preferably have a smooth outer surface, i.e., have a smooth surface intended for being in contact with the food products, in order to avoid leaving any permanent mark on the food products, although it is also possible that one or more rollers have protrusions, etc. to intentionally leave marks on the food products or to increase friction of the rollers with the food products. The rollers 30 may be made of any material suitable for being in contact with food products and suitable for withstanding the operating conditions of the system. Typically, the rollers 30 are made from a metallic or a polymeric material.

The conveyor belt 10 of both exemplary embodiments have an active section 11, wherein the conveyor belt 10 is configured to convey and support the encased food products, and an inactive section 12, wherein the conveyor belt 10 is not configured to convey and support the encased food products. In both exemplary embodiments, the active section 11 is arranged above the inactive section 12, although in other embodiments this could be different. The active section 11 defines the conveying path.

Both exemplary embodiments further comprise an air circulation unit 20 for creating a first airflow 21 in a first portion 13 of the conveying path and a second airflow 22 in a second portion 14 of the conveying path. The first and second airflows 21, 22 are perpendicular, or at least substantially perpendicular, to the conveying direction 100 of the encased food products. Additionally, in both exemplary embodiments both the first and second airflows 21, 22 follow a downward direction, although in other embodiments they could follow an upward direction or even one of the airflows 21, 22 could follow a downward direction and the other an upward direction.

When the airflows 21, 22 follow a downward direction, as shown, air impinges directly to food products, whereas when the airflows 21, 22 follow an upward direction, air flows through the rollers 30 of the conveyor belt 10 until it reaches indirectly the food products on the conveyor belt 10.

In order to create the first and second airflows 21, 22, the air circulation unit 20 of the exemplary embodiments shown comprises an air impulsion circuit having at least a first impulsion conduit 40 with a plurality of first blowing openings 41 facing the conveyor belt 10 in the first portion 13 of the conveying path, and a second impulsion conduit 42 with a plurality of second blowing openings 43 facing the conveyor belt 10 in the second portion of the conveying path. The air circulation unit 20 of the first and second exemplary embodiments further comprises an air return circuit comprising a first return conduit 44 with one or more first return openings 45 and a second return conduit 46 with one or more second return openings 47. The first blowing openings 41 and the one or more first return openings 45 are arranged to create the first airflow 21 and the second blowing openings 43 and the one or more second return openings 47 are arranged to create the second airflow 22.

In both exemplary embodiments, the first impulsion conduit 40, the second impulsion conduit 42, the first return conduit 44 and the second return conduit 46 extend longitudinally following a direction parallel to the conveying direction 100. However, this may be different in other embodiments.

Although not depicted in FIGS. 1 and 2, the air circulation unit 20 is fluidly connected to an air conditioning unit configured to condition the first airflow 21 to a first relative humidity and to a first temperature, and to condition the second airflow 22 to a second relative humidity and to a second temperature. The air conditioning unit may be a single unit capable of independently condition the first and second airflows 21, 22 or may comprise at least a single unit for each airflow 21, 22.

The conveyor belt 10 of both exemplary embodiments is further configured to rotate the food products, at least, in part of the conveying path, while the food products are being conveying by the conveyor belt 10 in the conveying direction 100 along the conveying path. It is preferred, although not necessary, that the food products are being rotated, at least, while they are being conveyed along the first portion 13 and the second portion 14 of the conveying path, i.e. it is preferred that the food products are being rotated while they are being subjected to the first airflow 21 and to the second airflow 22. This provides a more homogenous thermal treatment of the food products. It is also possible that the conveyor belt 10 is configured to rotate the food products along the entire conveying path.

In both exemplary embodiments, the temperature and relative humidity of the first airflow 21 are such that the encased food product is dried while being subject to said first airflow 21 and the temperature and relative humidity of the second airflow 22 are such that the encased food product previously dried, is cooked or partially cooked. For example, in both exemplary embodiments, the first airflow 21 may have a relative humidity from 1% to 20% and a temperature from 60°C to 100 °C and the second airflow 22 may have a relative humidity from 50% to 95% and a temperature from 60 °C to 90°C. However, in other embodiments the mentioned temperatures and relative humidities of the first and second airflows 21, 22 may differ. In both exemplary embodiments, the relative humidity and/or the temperature of the second airflow 22 are greater than the relative humidity and/or temperature of the first airflow, so that the encased food product is dried by the first airflow 21 and subsequently cooked, or at least partially cooked, by the second airflow 22 without further drying the encased food product.

In the first and second exemplary embodiments, the first treating step, i.e. the treating step provided by the first airflow 21 in the first portion 13 of the conveying path, can last from 1 minute to 10 minutes; and the second treating step, i.e. the treating step provided by the second air flow 22 in the second portion 14 of the conveying path, can last from 5 minutes to 30 minutes. However, in other embodiments the duration of the first and/or second treating steps may be different.

The first and second exemplary embodiments shown in FIGS. 1 and 2 differ, mainly, in that in the second exemplary embodiment the conveying path further comprises a third portion 15, located between the first and second portions 13, 14, wherein the encased food products are not subject to perpendicular airflow. This third portion 15 may also be known as rehydration portion as the water content of the encased food products may increase while they are in this portion of the conveying path.

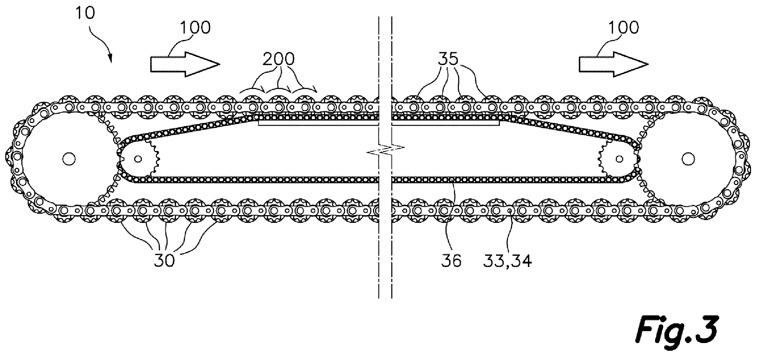

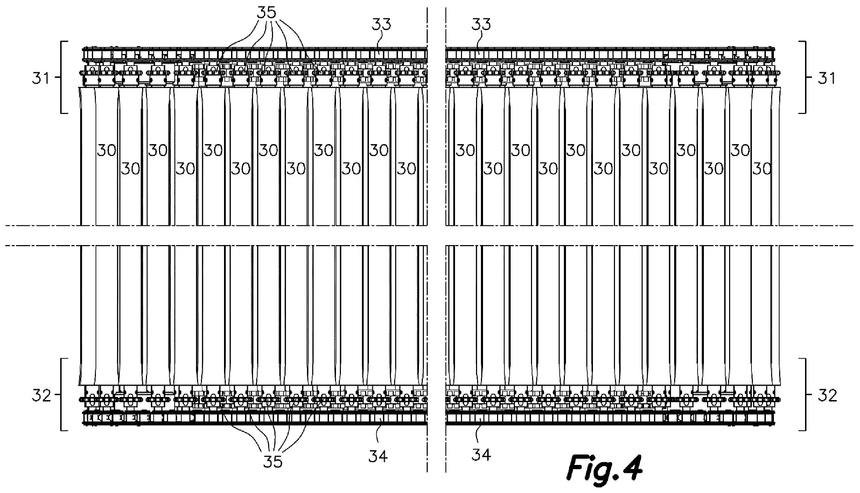

FIGS. 3 and 4 show, respectively, a front and a top view of the conveyor belt 10 of the first exemplary embodiment of a system according to the present invention. In this exemplary embodiment, the conveyor belt 10 comprises a plurality of rollers 30 having a first longitudinal end 31 and a second longitudinal end 32, with the first longitudinal end 31 being rotatably supported at a first drive chain 33 and the second longitudinal end 32 being rotatably supported at a second drive chain 34. Said first and second drive chains 33, 34 are configured to drive the plurality of rollers 30 in the conveying direction 100 along the conveying path, so that the encased food products supported by the rollers 30 are conveyed in the conveying direction 100 along the conveying path. Although not necessary, both first and second drive chains 33, 34 preferably operate simultaneously and synchronously, so that the rollers 30 advance with their longitudinal axes perpendicular to the conveying direction 100.

To rotate the rollers 30 following a rotating direction 200, so that the encased food products supported by the rollers 30 can be rotated in at least part of the conveying path, in this exemplary embodiment, the rollers 30 comprise at both the first and second longitudinal ends 31, 32 thereof, a gear 35 intermeshing, i.e. engaging, with a corresponding auxiliar drive chain 36 configured to rotate the rollers 30 around their corresponding rotation axis. Said rotation axis of the rollers 30 is perpendicular to the conveying direction 100 and parallel to the rotation axis of the encased food products supported by the rollers 30. In embodiments having a gear 35 at only one of the first and second longitudinal ends 31, 32, there is only one auxiliar drive chain 36. The gear 35 may be machined to the roller 30 or may be a separate element attached to it. If the gear 35 and the roller 30 are machined from the same blank, they are made from the same material, but if the gear 35 is a separate element fixed to the roller 30, both can be made of different materials.

In other embodiments, rotation of the rollers 30 can be provided, for example, by a pinion arranged at the first and/or second longitudinal end 31, 32 of the rollers 30 engaging an auxiliar rack configured to rotate the rollers 30 around their corresponding rotation axis. Other configurations are also possible.

In the exemplary embodiment shown, the rotating direction 200 of the rollers 30 is clockwise, although in other embodiments it may be counterclockwise. It is also possible that, in other embodiments, the rotating direction 200 in part of the conveying path is clockwise and in another part of the conveying path the rotating direction 200 is counterclockwise.

Although it is not necessary, in the exemplary embodiment shown the rollers 30 are machined so that they are perfectly concentrical. Perfectly concentrical rollers 30 together with rollers 30 having a smooth surface prevent marking the encased food products while they are being rotated and/or conveyed by the conveyor belt 10.

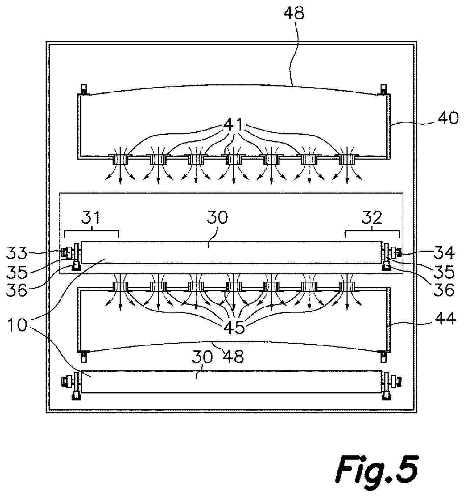

FIG. 5 shows a schematic section view of the first exemplary embodiment of a system according to the present invention.

In this exemplary embodiment, the first impulsion conduit 40 and the first return conduit 44 comprise a flexible wall 48 configured to adapt its shape to the inner pressure of the corresponding conduit 40, 44 so that the first air flow 21 is evenly distributed along the first portion 13 of the conveying path. By having at least one flexible wall 48, the first impulsion conduit 40 and the first return conduit 44 function as a lung, i.e. compensating reservoir, of the air impulsion circuit and of the air return circuit.

Although not shown in the section view of FIG. 5, in the first exemplary embodiment the second impulsion circuit 42 and the second return conduit 46 also include a flexible wall 48 that operates as previously described. In other embodiments, the first impulsion conduit 40, the second impulsion conduit 42, the first return conduit 44 and/or the second return conduit 46 may lack a flexible wall 48, or may be made entirely of a flexible wall 48.

In the first exemplary embodiment, the air impulsion circuit, and in particular, the first air impulsion conduit 40 and the second impulsion conduit 42 (not shown in FIG. 5, see FIG. 1) are arranged above the conveying path defined by the conveyor belt 10, whereas the air return circuit, and in particular, the first return conduit 44 and the second return conduit 45 (not shown in FIG. 5, see FIG. 1) are arranged below the conveying path defined by the conveyor belt 10. However, in other exemplary embodiments this may be different and, for example, the air impulsion circuit may be arranged below the conveying path and the air return circuit may be arranged above the conveying path. It is also possible that both the air impulsion circuit and the air return circuit are arranged above, or below, the conveying path. For example, the first and second blowing openings 41, 43 may be arranged above the first and second portions 13, 14, respectively, of the conveying path and the return openings 45, 46 of the air return circuit may be arranged also above the conveying path at longitudinal ends of the system, for example, near the longitudinal ends of the conveyor belt 10. Other configurations are also possible.

Both the first and second exemplary embodiments are specially envisaged for thermally treating elongated encased food products, as for example, sausages, although other types of encased food products can also be thermally treated using these exemplary embodiments.

Both the first and second exemplary embodiments are specially envisaged for thermally treating encased food products having an alginate or a collagen casing, although other types of casings can also be used. Preferably, although not limited to, the alginate or collagen casing is co-extruded with the food product.

What has been shown and described in FIGS. 3 to 5 in the context of the first exemplary embodiment of a system for thermally treating encased food products according to the present invention, it is also applicable to the second exemplary embodiment shown in FIG. 2.

Although not depicted in the drawings, the first and/or the second exemplary embodiments can further comprise a coextrusion unit for extruding a food dough into a flow of co-extruded food product having an alginate casing; a salt supply unit for supplying a salt solution to the flow of co-extruded food product; a separation unit for dividing the flow of co-extruded food product into individual co-extruded food products; and a transfer unit for transferring the individual co-extruded food products into the conveyor belt 10.

Although not depicted in the drawings, the first and/or the second exemplary embodiments can further comprise an automatic machine for forming and transferring batches of encased food products that comprises an automatic packaging unit.

What has been described in connection with the two exemplary embodiments of the system for thermally treating encased food products is also applicable to a method for thermally treating encased food products according to the invention.

References to directions up, down, left, right, clockwise, counterclockwise, etc. are based on the orientation and position of the elements as represented in the aforementioned drawings. However, such terms are not intended to limit the embodiments or claims to structures having a particular global orientation.

It will be understood that various parts of one embodiment of the invention can be freely combined with parts described in other embodiments, even being said combination not explicitly described, provided that such combination is within the scope of the claims and that there is no harm in such combination.

## Claims

1. Method for thermally treating encased food products, comprising the steps of:
- Conveying the encased food products in a conveying direction along a conveying path;
- Subjecting the encased food products to a first airflow (21) in a first portion (13) of the conveying path, the first airflow (21) being perpendicular to the conveying direction (100) and having a first relative humidity and a first temperature, thereby defining a first treating step;
- Subsequently subjecting the encased food products to a second airflow (22) in a second portion (14) of the conveying path, the second airflow (22) being perpendicular to the conveying direction (100) and having a second relative humidity and a second temperature, thereby defining a second treating step;
**characterized in that** the second relative humidity and/or the second temperature are greater than the first relative humidity and/or the first temperature; and
**in that** the method further comprises the step of rotating the encased food products about a rotation axis perpendicular to the conveying direction (100), while the encased food products are conveyed in the conveying direction (100) along at least part of the conveying path.

2. Method, according to claim 1, wherein the rotation axis of each encased food product is also perpendicular to the first and second airflows (21, 22).

3. Method, according to claim 1 or 2, wherein each encased food product rotates supported on two adjacent rollers (30) displaceable in the conveying direction (100); the two adjacent rollers (30) having a longitudinal axis parallel to the rotation axis of the encased food product.

4. Method, according to any one of the preceding claims, wherein the first relative humidity is from 1% to 20%, preferably from 5% to 10%; and/or the second relative humidity is from 50% to 95%, preferably from 70% to 90 %.

5. Method, according to any one of the preceding claims, wherein the first temperature is from 60 °C to 100 °C, preferably from 80 °C to 90 °C; and/or the second temperature is from 60 °C to 100 °C, preferably from 80 °C to 90 °C.

6. Method, according to any one of the preceding claims, wherein the first treating step lasts from 1 minute to 10 minutes, preferably from 3 minutes to 7 minutes; and/or the second treating step lasts from 5 minutes to 30 minutes, preferably from 7 minutes to 25 minutes.

7. Method, according to any one of the preceding claims, further comprising a rehydration step between the first treating step and the second treating step, wherein no perpendicular airflow is applied to the encased food product.

8. Method, according to any one of the preceding claims, wherein the encased food product is rotated, at least, while being conveyed along the first and/or second portions (13, 14) of the conveying path.

9. Method, according to any one of the preceding claims, wherein the encased food product is a co-extruded food product having an alginate or collagen casing.

10. System for thermally treating encased food products, the system comprising:
- A conveyor belt (10) configured to convey encased food products in a conveying direction (100) along a conveying path;
- An air circulation unit (20) configured to create a first airflow (21) in a first portion (13) of the conveying path, the first airflow (21) being perpendicular to the conveying direction (100), and to create a second airflow (22) in a second portion (14) of the conveying path, the second airflow (22) being perpendicular to the conveying direction (100); and
- An air conditioning unit fluidly connected to the air circulation unit (20) and configured to condition the first airflow (21) to a first relative humidity and to a first temperature, and to condition the second airflow (22) to a second relative humidity and to a second temperature;
**characterized in that** the conveyor belt (10) is further configured to rotate the encased food products about a rotation axis perpendicular to the conveying direction (100), while the encased food products are conveyed in the conveying direction (100) along at least a part of the conveying path.

11. System, according to claim 10, wherein the conveyor belt (10) comprises a plurality of rollers (30) displaceable in the conveying direction (100); the rollers (30) having a longitudinal axis parallel to the rotation axis of the encased food products.

12. System, according to claim 11, wherein the rollers (30) have a first and a second longitudinal end (31, 32), the first longitudinal end (31) being rotatably supported at a first drive chain (33) and the second longitudinal end (32) being rotatably supported at a second drive chain (34); and wherein the first and second drive chains (33, 34) are configured to drive the plurality of rollers (30) in the conveying direction (100) along the conveying path.

13. System, according to claim 12, wherein the rollers (30) comprise, at the first and/or second longitudinal end (31, 32) thereof, a gear (35) intermeshing with an auxiliar drive chain (36) configured to rotate the rollers (30) around their corresponding rotation axis or a pinion engaging with an auxiliar rack configured to rotate the rollers (30) around their corresponding rotation axis.

14. System, according to any one of claims 10 to 13, wherein the conveying path further comprises a rehydration portion (15) located between the first and second portions (13, 14), where no perpendicular airflow is applied to the encased food product.

15. System, according to any one of claims 10 to 14, wherein the air circulation unit (20) comprises:
- An air impulsion circuit having at least a first impulsion conduit (40) with a plurality of first blowing openings (41) facing the conveyor belt (10) in the first portion (13) of the conveying path, and a second impulsion conduit (42) with a plurality of second blowing openings (43) facing the conveyor belt (10) in the second portion (14) of the conveying path; and
- An air return circuit comprising at least a first return conduit (44) with one or more first return openings (45), the first blowing openings (41) and the one or more first return openings (45) being arranged to create the first airflow (21); the air return circuit further comprising at least a second return conduit (46) with one or more second return openings (47), the second blowing openings (43) and the one or more second return openings (47) being arranged to create the second airflow (22);
and wherein the first impulsion conduit (40), the second impulsion conduit (42), the first return conduit (44) and/or the second return conduit (46) includes at least one flexible wall (48) configured to react adapting its shape to an inner air pressure of the conduit (40, 42, 44, 46) so that the first and/or the second air flow (21, 22) is evenly distributed along the corresponding portion (13, 14) of the conveying path.
